# EUROPÄISCHE PATENTSCHRIFT

(11) **EP 0 503 010 B1**
(45) Veröffentlichungstag und Bekanntmachung des Hinweises auf die Patenterteilung: **30.11.1994**
(21) Anmeldenummer: 91914097.0
(22) Anmeldetag: 03.08.1991
(51) Int. Cl.: B60T 8/36

(54) **ELEKTROMAGNETVENTIL, INSBESONDERE FÜR HYDRAULISCHE BREMSANLAGEN MIT SCHLUPFREGELUNG**
ELECTROMAGNETIC VALVE, IN PARTICULAR AN ELECTROMAGNETIC VALVE FOR HYDRAULIC BRAKE SYSTEMS WITH ANTI-SLIP CONTROL
ELECTROVANNE, EN PARTICULIER POUR SYSTEMES DE FREINAGE HYDRAULIQUES AVEC REGLAGE ANTI-GLISSEMENT

(30) Priorität: 27.09.1990 DE 4030571
(43) Veröffentlichungstag der Anmeldung: 16.09.1992
(73) Patentinhaber: ITT Automotive Europe GmbH, 60488 Frankfurt (DE); ALFRED TEVES METALLWARENFABRIK GMBH & CO. OHG, 51702 Bergneustadt (DE)
(72) Erfinder: SEITZ, Karlheinz, D-6143 Lorsch (DE); LAUER, Josef, D-6696 Nonnweiler (DE); GOOSSENS, André, F., L., B-2560 Rumst (BE)
(86) Internationale Anmeldenummer: EP9101466
(87) Internationale Veröffentlichungsnummer: WO9205989

(56) Entgegenhaltungen:
- AU-B- 490 900
- DE-A- 3 810 581
- DE-A- 3 810 788
- FR-A- 2 619 871
- FR-A- 2 640 022

## Beschreibung

Die Erfindung betrifft ein Elektromagnetventil, insbesondere für hydraulische Bremsanlagen mit Schlupfregelung nach dem Oberbegriff des Anspruchs 1.

Bei den bisher verwendeten Elektromagnetventilen, wie beispielsweise bereits aus der DE-OS 37 29 216 bekannt ist, werden Ventilhülsen in das als Stahlventilblock ausgeführte Ventilgehäuse eingesetzt und verstemmt. Bei Verwendung von in der Grundstellung stromlos geschlossenen Elektromagnetventilen bildet dabei die Ventilhülse den eigentlichen Magnetkern der Magnetspule. Im Innenraum der Ventilhülse befindet sich der die Ventilnadel betätigende Magnetanker und dessen Führung. Bei Verwendung als in der Grundstellung stromlos offengeschaltetes Elektromagnetventil übernimmt jedoch die an der Verstemmstelle der Ventilhülse eingesetzte Buchse die Funktion des Magnetkerns.

Die mit einem Werkzeug in das Ventilblockgehäuse im wesentlichen nasenförmig eingedrückte Verstemmung sorgt sodann für die reibschlüssige Verbindung der zwischen dem Ventilgehäuse und der Buchse eingespannten Ventilhülse.

Insbesondere unter Berücksichtung der relativ hohen hydraulischen Prüfdrücke innerhalb der Ventilhülse ist das bisher gebräuchliche reibschlüssige Befestigen der Ventilhülse als verbesserungswürdig anzusehen, um ein etwaiges lösen der Ventilhülse infolge erhöhter Schubbeanspruchung zwischen den Kontaktflächen zu verhindern.

Daher ist es die Aufgabe der Erfindung unter Beibehaltung der reibschlüssigen Verbindung zwischen dem Ventilgehäuse, der Ventilhülse und der Buchse, die an den Kontaktflächen wirksame Haltekraft zu steigern.

Diese Aufgabe wird erfindungsgemäß durch die den Patentanspruch 1 kennzeichnenden Merkmale gelöst.

Die Erfindung basiert somit auf dem Gedanken, die mittels Verstemmen erzeugte reibschlüssige Verbindung um einen zwischen den Kontaktflächen wirksamen Formschluß zu ergänzen, der die Schubkräfte in der Befestigung verbessert aufnimmt.

In der konkreten Ausgestaltung des Erfindungsgedankens gemäß den Merkmalen des Anspruchs 2 und 3 erweist es sich als äußerst zweckmäßig, die Mantelfläche der Buchse zumindest mit einem die Oberfläche vergrößernden Abschnitt zu verse- hen, dessen als Kontaktfläche wirksame, konkav und/oder kon- vex geformte Mantelfläche bei Einwirkung der Verstemmkraft zu einer wellenförmigen Verformung der eingespannten Ventilhülse führt.

Alternativ kann die Mantelfläche der Buchse im Bereich der Ventilhülse mit einem hohlkehlenförmig umlaufenden Radius versehen werden. Die in beiden Fällen angestrebte Wechselbiegung des eingespannten Ventilhülsenblechs hemmt in Abhängigkeit des Verformungsgrades das Herausschlüpfen der Ventilhülse aus der Verstemmung, so daß hohe Schubkräfte übertragen werden können.

In der Weiterbildung des Erfindunsgedankens ist gemäß den Merkmalen des Anspruchs 4 vorgesehen, daß die formschlüssige Kontaktfläche am äußeren Umfang der Buchse zumindest mit partiell angeordneten, vorzugsweise oberflächenvergrößernden Ausnehmungen versehen ist, in denen die Ventilhülse gehalten ist. Damit kann einerseits durch die Vergrößerung der Kontaktfläche die Reibkraftübertragung gesteigert werden, andererseits ermöglicht das Einfügen und Anpassen der unter der Verstemmkraft zwangsverformten Ventilhülse einen gegen Schubbeanspruchung erhöhten Formwiderstand.

Zweckmäßigerweise sind gemäß Anspruch 5 die konkav und/oder konvex geformten Kontaktflächen der Buchse vorzugsweise quer oder auch längs zur Schubachse angeordnet, um einen optimalen Form-Widerstand zu erzielen.

Eine weitere Präzisierung zur konstruktiv sinnvollen Ausbildung des Erfindungsgedankens ist den Merkmalen des Anspruchs 6 zu entnehmen, wonach die Buchse auf der zur Innenfläche der Ventilhülse zugewandten Kontaktfläche im wesentlichen kegelförmig verjüngt ist. Hierdurch wird auf relativ einfache Weise das gewünschte Einscheren des Ventilgehäusematerials und Abdichten gewährleistet, wodurch ein etwaiges Losen der Ventilhülse unterbleibt.

Die Erfindung wird nachstehend anhand mehrerer Ausführungsbeispiele erläutert.

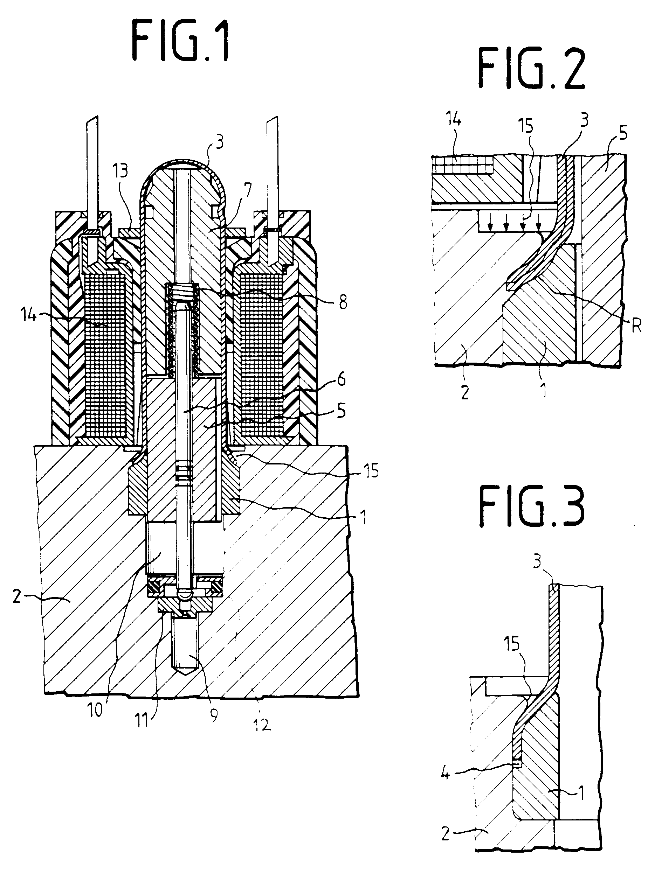

Es zeigen:
Figur 1
   eine Gesamtansicht des erfindungsgemäßen Elektromagnetventils im Querschnitt skizziert,
Figur 2
   einen vergrößerten Ausschnitt der im Ventilgehäuse verstemmten Ventilhülse gemäß Figur 1, mit der erfindungsgemäßen reib- und formschlüssig ausgebildeten Befestigung im Ventilgehäuse,
Figur 3
   eine weitere Ausführungsform der erfindungsgemäßen reib- und formschlüssigen Befestigung der Ventilhülse im Ventilgehäuse.

Die Figur 1 zeigt im Querschnitt die mit der Buchse 1 im Ventilgehäuse 2 kaltverstemmten Ventilhülse 3. Die Ventilhülse 3 wird aus unmagnetischem rostfreiem Stahl durch tiefziehen hergestellt. Die Ventilhülse 3 nimmt in ihrem Hohlraum den Magnetanker 5 mit der Ventilnadel 6 auf, sowie den Magnetkern 7. In einer abgesetzten Bohrung des Magnetkerns 7 befindet sich in koaxialer Anordnung gegenüber dem Magnetanker 5 eine Druckfeder 8, die über den Fortsatz der Ventilnadel 6 gestülpt an der Stirnfläche des Magnetankers 5 anliegt. Im Bereich des in das Ventilgehäuse 2 eingelassenen Druckmittelkanals 9 ist innerhalb einer abgesetzten Gehäusebohrung 10 mittels einer Verstemmung der Ventilsitz 11 gehalten. Unmittelbar darüber angeordnet, befindet sich ein Filterelement 12. Weiterhin ist mittels eines Greifrings 13 die Magnetspule 14 an der Ventilhülse 3 gesichert.

Das Tiefziehverfahren zur Fertigung der Ventilhülse 3 führt insbesondere bei Verwendung von rostfreiem Stahl zu einer Kaltverfestigung, so daß unter Wahrung eines von der Dünnwandigkeit der Ventilhülse 3 abhängigen Wirkungsgrades des Magnetkreises, eine im Gegensatz zu den zwangsläufig weichgeglühten Schweiß- oder Hartlötverbindungen hochfeste, d.h. hochdruckbeständige Ventilhülse 3 hergestellt werden kann. Da bei Verwendung des Elektromagnetventils für hydraulische Bremsanlagen der Innenraum der Ventilhülse 3 vom Hochdruck vollkommen beaufschlagt wird, erweist sich die vorbeschriebene Herstellungs- und Befestigungsweise der Ventilhülse 3 als äußerst vorteilhaft.

Um unter Einwirkung höchster Betriebsdrücke die Befestigung der Ventilhülse 3 innerhalb des Ventilgehäuses 3 sicherzustellen, ist in Bezug auf Fig. 1 nach Figur 2 zusätzlich zur reibschlüssigen Verbindung zwischen den Kontaktflächen der Buchse 1, der Ventilhülse 3 und dem Ventilgehäuse 2 die erfindungsgemäße formschlüssige Verbindung in vergrößertem Maßstab dargestellt, wonach die Mantelfläche der Buchse 1 im kegelförmigen Bereich mit einer konkav und konvex, bzw. wellenförmigen Oberfläche versehen ist und hierdurch nach dem Einstemmen der Nase 15 im Ventilgehäuse 2 eine Anpassung der dünnwandigen Ventilhülse 3 an die Oberflächenkontur der Buchse 1 erfährt, so daß bei Einwirkung erhöhter Schubkräfte - infolge erhöhter Innendrücke - der zusätzlich zur Verstemmung wirksame Formwiderstand ein etwaiges Herausschlüpfen der Ventilhülse 3 aus der Befestigung entgegensteht.

Figur 3 zeigt eine alternative Ausführungsform zur Erzeugung eines Formschlusses zwischen der verstemmten Befestigung der Ventilhülse 3 innerhalb des Ventilgehäuses 2.

Hierzu ist vorgesehen die Buchse 1 zumindest partiell über ihre Mantelfläche verteilt mit Ausnehmungen 4 zu versehen, die einerseits einen verlängerten Eingriff der Ventilhülse 3 zwischen der Buchse 1 und dem Ventilgehäuse 2 ermöglichen, um damit eine Vergrößerung der eingespannten Kontaktfläche zum Zwecke einer verbesserten reibschlüssigen Verbindung zu erzielen. Andererseits erfolgt unabhängig von der konstruktiven Ausführung der Ausnehmung 4, an der Mantelfläche der Buchse 1 eine mehr oder minder starke Verformung der Ventilhülse 3, so daß aus der Kombination von Reibschluß und Formschluß eine ausgesprochen sichere Befestigung der Ventilhülse 3 zwischen der Buchse 1 und dem Ventilgehäuse 2 gewährleistet ist.

### Bezugszeichenliste

- 1: Buchse
- 2: Ventilgehäuse
- 3: Ventilhülse
- 4: Ausnehmung
- 5: Magnetanker
- 6: Ventilnadel
- 7: Magnetkern
- 8: Druckfeder
- 9: Druckmittelkanal
- 10: Gehäusebohrung
- 11: Ventilsitz
- 12: Filterelement
- 13: Greifring
- 14: Magnetspule
- 15: Nase
- R: Radius

## Patentansprüche

1. Elektromagnetventil, insbesondere für hydraulische Bremsanlagen mit Schlupfregelung, in dem reibschlüssig zwischen einer in eine Gehäusebohrung (10) eines Ventilgehäuses (2) eingesetzten Buchse (1) und dem Ventilgehäuse (2) eine Ventilhülse (3) befestigt ist, wobei ein von der Ventilhülse (3) umschlossener Magnetankerk (5) in Abhängigkeit einer strombeaufschlagbaren, an der Ventilhülse (3) angebrachten Magnetspule (14) eine Hubbewegung vollzieht, so daß eine am Magnetanker (5) angeformte und von einem Magnetkern (7) teilumschlossene Ventilnadel (6) mit einem im Ventilgehäuse (2) befestigten Ventilsitz (11) zu korrespondieren vermag, dadurch
**gekennzeichnet**, daß im Bereich der zwischen der Buchse (1) und dem Ventilgehäuse (2) reibschlüssig eingespannten Ventilhülse (3) zumindest eine formschlüssige Verbindung mit formschlüssigen Kontaktflächen definierter Größe und Richtung vorgesehen ist, um der zwischen den Kontaktflächen wirkenden Schubkraft entgegenzuwirken.

2. Elektromagnetventil nach Anspruch 1, dadurch **gekennzeichnet**, daß die Mantelfläche der Buchse (1) eine zumindest konkav und/oder konvex geformten Kontaktfläche aufweist.

3. Elektromagnetventil nach Anspruch 1 oder 2, dadurch **gekennzeichnet**, daß die formschlüssigen Kontaktflächen zwischen der Ventilhülse (3) und der Buchse (1) zumindest aus einem an der Mantelfläche der Buchse (1) hohlkehlenförmigen Radius (R) gebildet ist.

4. Elektromagnetventil nach einem der vorhergehenden Ansprüche, dadurch **gekennzeichnet**, daß die formschlüssige Kontaktfläche am äußeren Umfang der Buchse (1) zumindest mit partiell angeordneten, vorzugsweise oberflächenvergrößerten Ausnehmungen (4) versehen ist, in denen die Ventilhülse (3) gehalten ist.

5. Elektromagnetventil nach mindestens einem der vorhergehenden Ansprüche, dadurch **gekennzeichnet**, daß die Mantelfläche der Buchse (1) in Längs- und/oder Querrichtung zur Symmetrieachse mit einer konkav sowie konvex geformten Oberfläche versehen ist.

6. Elektromagnetventil nach einem der vorhergehenden Ansprüche 1 bis 5, dadurch **gekennzeichnet**, daß die Buchse (1) auf der zur Innenfläche der Ventilhülse (3) zugewandten Kontaktfläche im wesentlichen kegelförmig verjüngt ist.

7. Elektromagnetventil nach Anspruch 1, dadurch **gekennzeichnet**, daß die in das Ventilgehäuse (2) eingesetzte Buchse (1) als Magnetkern ausgebildet ist, dessen im wesentlichen kegelstumpfförmiger Mantelabschnitt mit formschlüssigen Elementen, z.B. Rastelemente versehen ist, die durch die auf das Ventilgehäuse (2) ausgeübte Verstemmung zwischen den Kontaktflächen der Ventilhülse (3) und der Buchse (1) unlösbar ineinander greifen.

8. Verfahren zur Herstellung eines Elektromagnetventils, insbesondere für hydraulische Bremsanlagen mit Schlupfregelung, in dem reibschlüssig zwischen einer in einer Gehäusebohrung (10) eines Ventilgehäuses (2) eingesetzten Buchse (1) und dem Ventilgehäuse (2) eine Ventilhülse (3) befestigt ist, wobei ein von der Ventilhülse (3) umschlossener Magnetanker (5) in Abhängigkeit einer strombeaufschlagbaren, an der Ventilhülse (3) angebrachten Magnetspule (14) eine Hubbewegung vollzieht, so daß eine am Magnetanker (5) angeformte und von einem Magnetkern (7) teilumschlossene Ventilnadel (6) mit einem im Ventilgehäuse (2) befestigten Ventilsitz (11) zu korrespondieren vermag, daduch **gekennzeichnet**, daß die Ventilhülse (3) aus austenitischem, rostfreiem Stahl mittels Tiefziehverfahren hergestellt wird und das die reib- und formschlüssige Befestigung der Ventilhülse (3) im Ventilgehäuse (2) mittels Kaltverstemmung des Ventilgehäusematerials erfolgt, um dünnwandige Ventilhülsen mit hoher Festigkeit zu schaffen.

## Claims

1. An electromagnetic valve, especially for use in hydraulic brake systems including slip control, wherein a valve sleeve (3) is mounted in friction-locking manner between a bushing (1) inserted into a housing bore (10) of a valve housing (2) and the valve housing (2), with a magnetic armature (5) enclosed by the valve sleeve (3) performing a stroke movement in response to an energizable magnetic coil (14) provided on the valve sleeve (3), thereby enabling a needle valve (6) formed on the magnetic armature (5) and partially enclosed by a magnetic core (7) to correspond with a valve seat (11) mounted in the valve housing (2),
**characterized** in that provided in the area of the valve sleeve (3), which is clamped in a friction-locking manner between the bushing (1) and the valve housing (2), is at least one form-locking connection with form-locking contact surfaces of defined size and orientation to counteract the thrust force acting between the contact surfaces.

2. An electromagnetic valve as claimed in claim 1,
**characterized** in that the peripheral surface of the bushing (1) is furnished with a contact surface of an at least concave and/or convex configuration.

3. An electromagnetic valve as claimed in claim 1 or claim 2,
**characterized** in that the form-locking contact surfaces between the valve sleeve (3) and the bushing (1) are formed at least of a radius (R) fillet-shaped on the peripheral surface of the bushing (1).

4. An electromagnetic valve as claimed in any one of the preceding claims,
**characterized** in that the form-locking contact surface on the outer periphery of the bushing (1) is provided at least with partially disposed recesses (4), preferably of enlarged surfaces, in which the valve sleeve (3) is held.

5. An electromagnetic valve as claimed in at least one of the preceding claims,
**characterized** in that the peripheral surface of the bushing (1), in the longitudinal and/or transverse direction relative to the axis of symmetry, is provided with a surface of concave and convex configuration.

6. An electromagnetic valve as claimed in any one of the preceding claims 1 to 5,
**characterized** in that the bushing (1) tapers substantially conically on the contact surface facing the inner surface of the valve sleeve (3).

7. An electromagnetic valve as claimed in claim 1,
**characterized** in that the bushing (1) inserted into the valve housing (2) is formed as a magnetic core, the peripheral surface of which latter, being substantially of truncated-cone-shaped configuration, is provided with form-locking elements, for instance arresting elements, which engage each other undetachably owing to the caulking effect between the contact surfaces of the valve sleeve (3) and the bushing (1) exerted on the valve housing (2).

8. A method of manufacturing an electromagnetic valve, especially for use in hydraulic brake systems including slip control, wherein a valve sleeve (3) is mounted in friction-locking manner between a bushing (1) inserted into a housing bore (10) of a valve housing (2) and the valve housing (2), with a magnetic armature (5) enclosed by the valve sleeve (3) performing a stroke movement in response to an energizable magnetic coil (14) provided on the valve sleeve (3), thereby enabling a needle valve (6) formed on the magnetic armature (5) and partially enclosed by a magnetic core (7) to correspond with a valve seat (11) mounted in the valve housing (2),
**characterized** in that the valve sleeve (3) is made of austenitic, stainless steel by deep-drawing, and in that the friction-locking and form-locking mounting of the valve sleeve (3) in the valve housing (2) is effected by cold caulking of the valve housing material to provide thin-walled valve sleeves of high strength.

## Revendications

1. Soupape électromagnétique, notamment pour installations de freinage hydrauliques à régulation du glissement, dans laquelle une douille de soupape (3) est fixée selon une liaison par friction entre un manchon (1) inséré dans un perçage (10) d'un boîtier à soupapes (2) et ce boîtier à soupapes (2), et dans laquelle une armature magnétique (5) entourée par la douille de soupape (3) exécute une course de déplacement en fonction d'une bobine magnétique (14) pouvant être chargée par un courant et montée sur la douille de soupape (3), de sorte qu'un pointeau de soupape (6), formé par façonnage sur l'armature magnétique (15) et partiellement entouré par un noyau magnétique (7), peut correspondre avec un siège de soupape (11) fixé dans le boîtier à soupapes (2), caractérisée en ce qu'au niveau de la douille de soupape (3) serrée selon une liaison par friction entre le manchon (1) et le boîtier à soupapes (2), il est prévu au moins une liaison par complémentarité de formes avec des surfaces de contact de liaison par formes complémentaires possédant une étendue et une direction définies de manière à s'opposer à la force de cisaillement agissant entre les surfaces de contact.

2. Soupape électromagnétique selon la revendication 1, caractérisée en ce que la surface enveloppe du manchon (1) possède une surface de contact conformée avec une forme au moins concave et/ou convexe.

3. Soupape électromagnétique selon la revendication 1 ou 2, caractérisée en ce que les surfaces de contact de liaison par formes complémentaires entre la douille de soupape (3) et le manchon (1) sont constituées par au moins une surface coudée (R) en forme de gorge ménagée dans la surface enveloppe du manchon (1).

4. Soupape électromagnétique selon l'une des revendications précédentes, caractérisée en ce que la surface de contact de liaison par formes complémentaires comporte, sur la périphérie extérieure du manchon (1), au moins des évidements partiels (4), possédant une surface de préférence accrue et dans lesquelles est retenue la douille de soupape (3).

5. Soupape électromagnétique selon au moins l'une des revendications précédentes, caractérisée en ce que la surface enveloppe du manchon (1) comporte, dans la direction longitudinale et/ou transversale par rapport à l'axe de symétrie, une surface possédant une forme concave ainsi qu'une forme convexe.

6. Soupape électromagnétique selon l'une des revendications précédentes 1 à 5, caractérisée en ce que le manchon (1) se rétrécit essentiellement avec une forme conique au niveau de la surface de contact tournée vers la surface intérieure de la douille de soupape (3).

7. Soupape électromagnétique selon la revendication 1, caractérisée en ce que le manchon (1) inséré dans le boîtier à soupapes (2) est réalisé sous la forme d'un noyau magnétique, dont la section enveloppe essentiellement de forme tronconique est équipée d'éléments de liaison par formes complémentaires, par exemple des éléments d'encliquetage, qui engrènent les uns dans les autres d'une manière inamovible en raison de l'action de coincement, appliquée au boîtier à soupapes (2) et existant entre les surfaces de contact de la douille de soupape (3) et du manchon (1).

8. Soupape électromagnétique, notamment pour des installations de freinage hydrauliques avec régulation du glissement, dans laquelle une douille de soupape (3) est fixée selon une liaison par friction entre un manchon (1) inséré dans un perçage (10) d'un boîtier à soupapes (2) et ce boîtier à soupapes (2), et dans laquelle une armature magnétique (5) entourée par la douille de soupape (3) exécute une course de déplacement en fonction d'une bobine magnétique (14) pouvant être chargée par un courant et montée sur la douille de soupape (3), de sorte qu'un pointeau de soupape (6), formé par façonnage sur l'armature magnétique (15) et partiellement entouré par un noyau magnétique (16), peut correspondre avec un siège de soupape (11) fixé dans le boîtier à soupapes (2), caractérisée en ce que la douille de soupape (3) est réalisée en un acier austénitique inoxydable selon un procédé d'emboutissage profond et que la fixation par friction et par formes complémentaires de la douille de soupape (3) dans le boîtier à soupapes (2) est réalisée au moyen d'un matage à froid du matériau du boîtier à soupapes, de manière à former des douilles de soupape à paroi mince présentant une grande solidité.
